# EUROPEAN PATENT SPECIFICATION

(11) **EP 3 422 479 B1**
(45) Date of publication and mention of the grant of the patent: **18.11.2026**
(21) Application number: 18177226.0
(22) Date of filing: 12.06.2018
(51) Int. Cl.: H01R 4/38, H01R 4/58, H01R 13/03

(54) **ELECTRICAL HIGH-CURRENT CONNECTOR AND METHOD FOR PRODUCING AN ELECTRICAL HIGH-CURRENT CONNECTOR**
ELEKTRISCHER HOCHSTROMVERBINDER UND VERFAHREN ZUR HERSTELLUNG EINES ELEKTRISCHEN HOCHSTROMVERBINDERS
CONNECTEUR À FORT COURANT ÉLECTRIQUE ET PROCÉDÉ DE FABRICATION D'UN CONNECTEUR À FORT COURANT ÉLECTRIQUE

(30) Priority: 13.06.2017 DE 102017112947
(43) Date of publication of application: 02.01.2019
(73) Proprietor: TE Connectivity Germany GmbH, 64625 Bensheim (DE)
(72) Inventor: KIOSCHIS, Kai, 76829 Landau (DE); DRESSEL, Andre Martin, 68623 Lampertheim (DE)
(74) Representative: Patentanwaltskanzlei WILHELM & BECK

(56) References cited:
- EP-A1- 2 266 167
- EP-B1- 2 266 167
- WO-A1-2015/118974
- DE-A1- 102014 218 559
- DE-A1- 2 435 909
- JP-A- H11 167 911
- US-A- 4 973 370

## Description

The invention relates to an electrical high-current connector and to a method for producing an electrical high-current connector, in particular for an electrical cell connector or an electrical module connector for an accumulator or a battery for the automotive industry. The invention further relates to an electrical cell connector and an electrical module connector for an accumulator or a battery, and to an electrical device, in particular an accumulator or a battery in the automotive industry.

In the electrical sector (electrics, electrical engineering, electrical power engineering etc.), a large number of electrical connectors or connection partners are known which serve the purpose of transmitting electric currents and voltages in the medium-current or high-current and/or medium-voltage or high-voltage range. In this context, the connectors need to ensure, temporarily and/or permanently, problem-free transmission of electric power, for example for supplying and/or distributing electrical energy in warm, possibly hot, uncontaminated, humid and/or chemically aggressive environments. As there is a wide range of applications, a great number of connectors are known in the automotive sector or a non-automotive sector.

Such connectors, for example electrical high-current connectors, can be installed on an electrical unit, such as on/in an accumulator or a battery, in an inverter, in a switchgear, etc. - High fuel costs and attempts to reduce environmental impacts make electric and hybrid vehicles necessary in the automotive sector, for example. One aspect of these vehicles is handling high electric operating currents and/or voltages, wherein the related components of the electric or hybrid vehicles must be designed accordingly. This relates to high-current/high-voltage cables (e.g. stranded wire, conductor rail, etc.), including the contact units thereof (e.g. connecting piece, bus bar, etc.).

JP 08306417 A discloses an electrical high-current connector comprising a flat strand, the two longitudinal end sections of the flat strand being provided with flat end contact sleeves. An individual, comparatively large through-recess in the respective end contact sleeve is larger than a related through-recess in the flat strand, which substantially has the same diameter as the second, comparatively small through-recess in this end contact sleeve. In an application of the high-current connector, a nut, with a washer, is screwed directly onto the flat strand in the region of the related, comparatively large through-recess in the flat strand. The end contact sleeve is mounted opposite, for example on a bolt-shaped battery terminal.

JP 2008/041330 A also shows an electrical high-current connector comprising a flat strand, the two longitudinal end sections of the flat strand being provided with flat end contact sleeves. In the respective end contact sleeve and in the related longitudinal end section of the flat strand, a through-recess is established, by means of which the high-current connector can be attached for example to a bolt-shaped battery terminal. In this case, the through-recess in the flat strand is reinforced by means of a cylindrical support collar, in order to receive mechanical voltages from clamping forces on the related end contact sleeves, so that an external surface of the related end contact sleeve does not arch under the resulting voltages.

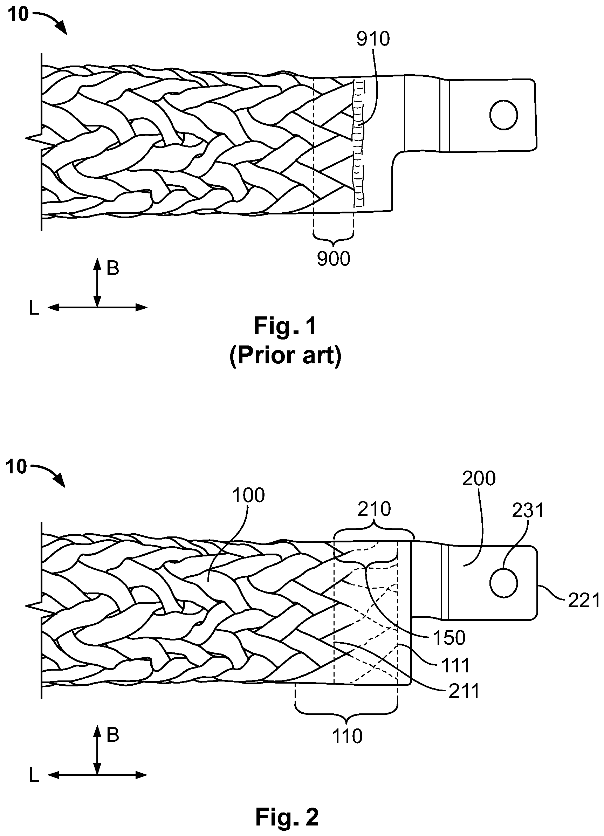

An electrical high-current connector 10 from the prior art (cf. Fig. 1) often further comprises an electrical stranded wire 100 and a solid electrical connecting piece 200, in particular a so-called solid electrical bus bar 200, the stranded wire 100 and the connecting piece 200 initially being produced separately from one another. For producing the high-current connector 10, the stranded wire 100, for example as a flat strand 100, is braided from individual strands, and the connecting piece 200 is embossed/stamped from a sheet, finished and prepared for a soldering or welding process. Furthermore, a longitudinal end section 900 of the stranded wire is prepared and compacted. The free longitudinal end of the compacted longitudinal end section 900 of the stranded wire is subsequently prepared for a soldering or welding process, and, following on chronologically, the connecting piece is soldered or welded (910) onto the compacted longitudinal end section 900 of the stranded wire. This production method is time-consuming and thus costly.

DE 10 2014 218 559 A1, US 4 973 370 A and JP H11 167911 A each disclose an electrical high-current connector for the automotive industry, having an electrical stranded wire. In DE 10 2014 218 559 A1, which forms the basis for the preambles of claims 1 and 8, the wires of an end portion of the stranded wire are bonded together by tin, whereby this end section is crimped to a connector. In US 4 973 370 A, the wires of an end portion of the stranded wire comprise a liquid coating, whereby this end section is clamped by a connector. In JP H11 167911 A, an end portion of the stranded wire comprises a cable lug, wherein the end portion and the cable lug constitute the electrical connector. - And EP 2 266 167 A1 teaches a compacted and essentially solid portion of a stranded wire for a low-current electrical terminal system.

An object of the invention is to improve such electrical high-current connectors, make them more cost-effective and/or produce them more cost-effectively. Furthermore, an object of the invention is to specify an improved method for producing such an electrical high-current connector. According to the invention, it should be possible to be able to dispense with at least one of the comparatively costly steps (compacting, soldering or welding) and still maintain a long-term functional electrical high-current connector. Preferably, it should be possible to dispense with both of the comparatively costly steps.

The object of the invention is achieved according to the independent claims by means of an electrical high-current connector, in particular for an electrical cell connector or an electrical module connector for an accumulator or a battery for the automotive region; by a method for producing an electrical high-current connector; by means of an electrical cell connector for an accumulator or a battery; by means of an electrical module connector for an accumulator or a battery; and by means of an electrical device, in particular an accumulator or a battery for the automotive industry. - Advantageous further developments, additional features and/or advantages of the invention will be evident from the dependent claims and the following description.

The inventive electrical high-current connector comprises an electrical stranded wire and at least one solid electrical connecting piece, in particular a solid bus bar, wherein a longitudinal end section of the stranded wire is embedded in the material of a solid longitudinal section of the connecting piece, and wherein in said embedding, in a three-dimensional transition structure of the longitudinal end section of the stranded wire with the connecting piece, the material of the connecting piece is located between the strands of the stranded wire.

In the inventive method for producing an electrical high-current connector, the high-current connector has an electrical stranded wire and at least one solid electrical connecting piece, in particular a solid bus bar, wherein a longitudinal end section of the stranded wire is embedded into the material of a solid longitudinal section of the connecting piece, and wherein in said embedding, in a three-dimensional transition structure of the longitudinal end section of the stranded wire with the connecting piece, the material of the connecting piece is located between the strands of the stranded wire.

According to the invention, obtaining the sheet for the connecting piece, (die) stamping the connecting piece out of the sheet, finishing and preparing the connecting piece for the soldering or welding process can be dispensed with (at least four steps). Furthermore, according to the invention, a costly compacting of the longitudinal end section of the stranded wire, a preparation of the longitudinal end of the longitudinal end section of the stranded wire for the soldering or welding process, and the costly soldering or welding process of the connecting piece onto the compacted longitudinal end section of the stranded wire can also be dispensed with (at least three steps).

The invention realises this by way of the longitudinal end section of the stranded wire, which longitudinal end section is embedded in the material of a solid longitudinal section (e.g. of a longitudinal end section or a predominantly longitudinal section) of the connecting piece, or by incorporating the longitudinal end section of the stranded wire into the material of the solid longitudinal section of the connecting piece, and by finishing the connecting piece. In other words, by means of or by way of the invention, these at least seven steps of the prior art can be reduced to two comparable steps, wherein, according to the invention, in particular the two costly steps (compacting and soldering/welding process) are dispensed with. - Furthermore, compared to the prior art, a better electrical transition resistance arises, whereby the entire high-current connector can optionally be formed smaller.

In an embodiment, a longitudinal end section of the stranded wire is embedded in or incorporated into the material of a longitudinal end section of the connecting piece. In an embodiment, a longitudinal end section of the stranded wire is embedded in or incorporated into the material of a predominantly longitudinal section of the connecting piece. In the first case, a transition structure (see below) consisting of the longitudinal end section of the stranded wire and the longitudinal end section of the connecting piece is located in a section away from a longitudinal end of the high-current connector. In the second case, this transition structure can extend substantially closer to a related longitudinal end of the high-current connector.

In an embodiment, in the high-current connector, by means of the two longitudinal end sections, which are related to one another, or the two longitudinal sections, which are related to one another, of the stranded wire and of the connecting piece, a substantially three-dimensional transition structure has been formed or is formed thereby, in which the high-current connector is significantly constituted by the stranded wire and the connecting piece. In other words, with the exception of a second transition structure, the actual high-current connector, i.e. excluding an encapsulation, a contact element, etc., away from the three-dimensional transition structure, is constituted, on the one hand, substantially by the stranded wire and, on the other hand, substantially by the connecting piece.

In an embodiment, the connecting piece has been formed or is formed such that an external dimension of the stranded wire, in particular an external dimension of the stranded wire in the longitudinal direction, has been or is significantly greater. In other words, the connecting piece is not only formed from the stranded wire, but rather the connecting piece is provided externally on the stranded wire, a weight of the stranded wire increasing significantly for example, naturally in a manner depending on the length thereof.

In an embodiment, the connecting piece has been or is moulded onto the longitudinal end section of the stranded wire. - A moulding can be understood to mean a moulding from a liquid state (molten metal; e.g. casting (gravity casting, (low-) pressure casting, etc.), optionally thixoforging, etc.), from a plastic state (molten metal or plastically deformable metal blank; e.g. thixoforging, optionally hot working, etc.) and, contrary to DIN 8580, from a solid state (plastically deformable metal blank; e.g. optionally hot working, semi-hot working, cold working, etc.). In this case, joining the connecting piece by moulding onto the stranded wire, for example by a method for embedding, integrally casting/casting, forging, forming, injection-moulding, covering, etc.

Moulding is not only understood to mean a forming in which a solid body with a geometrically (pre)defined form (producing a first form of solid body), i.e. that of the connecting piece, is produced out of an amorphous base material. Rather, the fact that the base material can already possess a protoform, for example that of a cuboid, which is brought into the geometrical (pre)defined form (also: producing the first form of solid body), i.e. again that of the connecting piece, is additionally taken into consideration.

In an embodiment, the connecting piece has been or is cast onto the longitudinal end section of the stranded wire, or the connecting piece has been or is forged onto the longitudinal end section of the stranded wire, in particular cold forged. Forging can be understood to mean a thixoforging, a hot forging (hot working), a semi-hot forging (semi-hot working) or a cold forging (cold working).

In an embodiment, the high-current connector is free from at least one of preferably two possible end contact sleeves. In particular, the high-current connector has no individual end contact sleeve. Furthermore, the connecting piece cannot be formed as a stamped part. In addition, the stranded wire can be formed free from at least one of preferably two possible compacted sections. In particular, the stranded wire has no individual compacted section. Moreover, the high-current connector can be free from at least one of preferably two possible soldering or welding connections. In particular, the stranded wire has no individual soldering or welding connections.

In an embodiment, the stranded wire is formed as a flat strand (braided wire), a round strand (braided cable, stranded wire) or a braided sleeving. Furthermore, the stranded wire can have a copper material or an aluminium material. In addition, the stranded wire can serve as a casting core for producing the high-current connector.

Possible fields of application for such high-current connectors are in electric vehicles (means of transport which can (also) be driven with electrical energy, i.e. road vehicles, motor vehicles, rail vehicles, ships, aeroplanes), in switch-gears, in apparatus engineering, in materials-handling technology, in electroplating, in electric furnace engineering, etc. The high-current connectors can be employed, for example, as cell connectors, as battery cables, as cables, in particular as secondary cables, for resistance welding, as connecting cables, as earth cables, as grounding cables, as grounding straps, earth connectors, etc.

The inventive electrical cell connector or the inventive electrical module connector comprises an inventive electrical high-current connector, and/or an electrical high-current connector of the cell connector or the module connector is produced by an inventive method. - In an embodiment, with the exception of an electrical contact unit of an electrical contact element and optionally with the exception of an individual longitudinal end region of at least one attachment means, the entire high-current connector is fully encapsulated in the width direction, height direction and longitudinal direction.

In an embodiment, the high-current connector of the cell connector or the module connector is electrically insulated in its central region by means of a jacket. Furthermore, the high-current connector can be electrically insulated on at least one longitudinal end region by means of a two-part capsule. In addition, two insulating shells of the capsule can be formed pluggable to one another and in particular lockable to one another. Moreover, an individual insulating shell of the capsule can receive an electrical contact element of the cell connector or module connector. In addition, an electrical contact unit of the contact element can be exposed on a side of the insulating shell.

The invention is explained in greater detail below using exemplary embodiments with reference to the attached schematic drawings, which are not true to scale. Sections, elements, structural parts, units, diagrams and/or components which possess an identical, univocal or similar design and/or function are identified by the same reference numbers in the description of the figures (see below), the list of reference numbers, the claims and in the figures (Figs.) of the drawings. A possible alternative, a steady-state and/or kinematic reversal, a combination, etc., which is not explained in the description of the invention (see above) and which is not illustrated in the drawings and/or is inconclusive, to the exemplary embodiments of the invention or a component, a diagram, a unit, a structural part, an element or a section thereof can be inferred from the description of the figures.

In the invention, a feature (section, element, structural part, unit, component, function, variable etc.) can be configured to be positive, i.e. present, or negative, i.e. absent, with a negative feature not being explicitly explained as a feature if the fact that it is absent is not deemed to be significant according to the invention. A feature of this specification (description, list of reference numbers, claims, drawings) can be applied not only in a specified manner but rather can also be applied in a different manner (isolation, summary, replacement, addition, uniqueness, omission, etc.). In particular, by using a reference number and an associated feature, or vice versa, in the description, the list of reference numbers, the claims and/or the drawings, it is possible to replace, add or omit a feature in the claims and/or the description. Moreover, a feature in a claim can be interpreted and/or specified in greater detail as a result.

The features of this specification can (in view of the (largely unknown) prior art) also be interpreted as optional features; i.e. each feature can be understood as an optional, arbitrary or preferred feature, i.e. as a non-binding feature. It is thus possible to detach a feature, optionally including its periphery, from an exemplary embodiment, with this feature then being transferable to a generalised inventive concept. The lack of a feature (negative feature) in an exemplary embodiment shows that the feature is optional with regard to the invention. Furthermore, in the case of a type term for a feature, a generic term for the feature can also be read alongside this, (optionally further hierarchical classification into subgenus, section, etc.), as a result of which it is possible to generalise a or this feature, e.g. taking into account identical effect and/or equivalence. In the figures, which are merely exemplary:
- Fig. 1: shows a two-dimensional plan view, which is broken away on one side, of an electrical high-current connector formed as a cell connector according to the prior art, with a connecting piece welded onto a compacted longitudinal end of a stranded wire,
- Fig. 2: likewise shows a two-dimensional plan view, which is broken away on one side, of an electrical high-current connector formed as a cell connector with a connecting piece cast onto a longitudinal end of a stranded wire, and
- Fig. 3: shows a lateral perspective view of an encapsulated electrical cell connector or an encapsulated electrical module connector for an accumulator or a battery, with an electrical high-current connector.

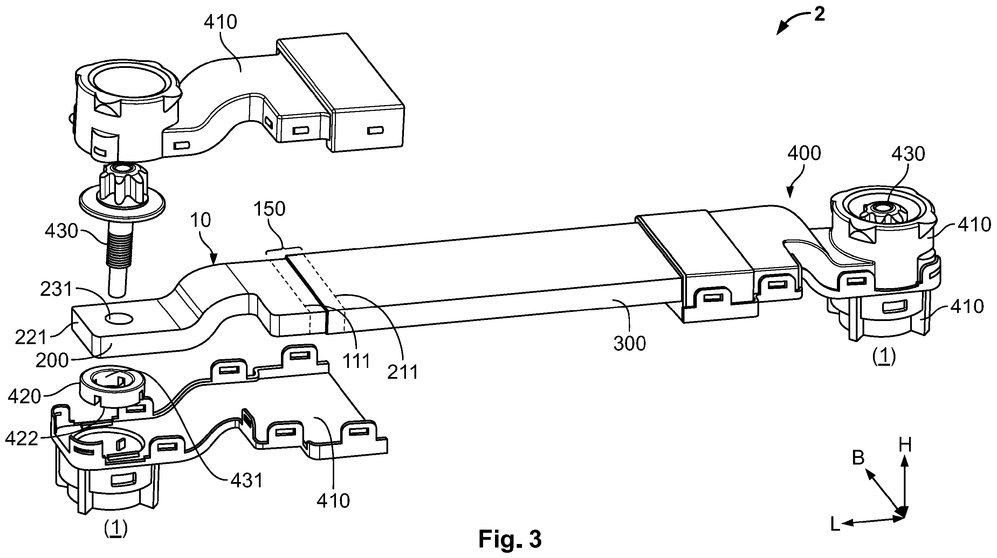

The invention is explained in greater detail below using exemplary embodiments of two embodiments of a variant of an electrical high-current connector 10 or strand connector 10, without an encapsulation (cf. Figs. 2 and 3), for an electrical connector 2 or high-current connector 2, preferably a cell connector 2 or a module connector 2, in particular for an accumulator 1 or a battery 1 for the automotive industry. Only those spatial sections of a subject-matter of the invention which are necessary for understanding the invention are illustrated in the drawings.

Although the invention is more closely described and illustrated by way of preferred exemplary embodiments, the invention is not restricted by the disclosed exemplary embodiments. Other variations can be derived herefrom and/or from the above (description of the invention) without departing from the scope of protection of the invention. In this way, the high-current connector 2, 10 can be applied, for example, to an electrical unit 1, an electrical device 1, an electrical module 1, an electrical apparatus 1, an electrical installation 1, an electrical system 1, an inverter 1, a switchgear 1, etc.

Hereinafter, the explanation of the invention using the drawings relates to a width direction B or a width axis B, a height direction H or a height axis H and a longitudinal direction L or a longitudinal axis L of the high-current connector 2, 10 or its electrical stranded wire 100 and its electrical connecting piece 200. In this case, the stranded wire 100 is formed as a flat strand 100 (braided wire 100). A round strand (braided cable, stranded wire), a braided sleeving, etc. can of course likewise be used. In this case, the connecting piece 200 is further formed as a solid bus bar 200; other connecting pieces, such as contact units, etc., can of course be realised.

The flat strand 100 is embedded in or incorporated into the connecting piece 200, preferably by a moulding method, such as a casting method or a forging method, for example a cold forging method. In other words, the connecting piece 200, which temporally beforehand has not yet been moulded, e.g. as a liquid, formless starting material (casting method) or in a protoform (e.g. a cuboid) (forging method), is shaped on the flat strand 100 as a first form (as the connecting piece 200). In this case, a longitudinal end section L, 110 of the stranded wire 100 is embedded in or incorporated into the connecting piece 200, or vice versa.

In this case, a transition structure 150 constituted by the flat strand 100 and the connecting piece 200 is established between the flat strand 100 and the connecting piece 200. In other words, in the transition structure 150 extending in the width direction B, height direction H and longitudinal direction L, the high-current connector 10 has the flat strand 100 and the connecting piece 200, it being preferable that, in the transition structure 150, structures of the flat strand 100 alternate with structures of the connecting piece 200. This means that these structures pass through each other and thus enable a solid cohesion of the flat strand 100 with the connecting piece 200.

The longitudinal end section L, 110 of the stranded wire 100 (depicted in Figs. 2 and 3) can extend into a longitudinal end section 210 (material) of the connecting piece 200 (first embodiment). In this case, a (bonded) longitudinal end 111 of the longitudinal end section L, 110 of the stranded wire 100 is placed in the connecting piece 200. Furthermore, a (bonded) longitudinal end 211 of the connecting piece 200 is placed in the stranded wire 100. The two longitudinal ends 111, 211 constitute the transition structure 150 inside the high-current connector 10, in which the high-current connector 10 is constituted by the stranded wire 100 and the connecting piece 200. A possibly necessary through-recess 231 in the connecting piece 200 for an attachment means 430 (see Fig. 3) can be established temporally during (e.g. by means for a mould core) or after moulding the connecting piece 200.

Looking at a longitudinal end region of the high-current connector 10, the longitudinal end region being longer than the connecting piece 200 including the transition structure 150, from a longitudinal end 221 of the connecting piece 200 in the longitudinal direction L, the high-current connector 10 thus initially exclusively has the connecting piece 200. The transition structure 150, in which the high-current connector 10 comprises the stranded wire 100 and the connecting piece 200, then follows in the longitudinal direction L. Further in the longitudinal direction L, the high-current connector 10 exclusively has the stranded wire 100. In this case, the transition structure 150 can be embedded in the connecting piece 200 as a kind of core (see below).

Alternatively (second embodiment), the longitudinal end section L, 110 of the stranded wire 100 (not depicted) can extend into a substantially or predominantly longitudinal section L (material) of the connecting piece 200. In this case, the longitudinal end section L, 110 of the stranded wire 100 can extend substantially to a longitudinal end 221 of the connecting piece 200 opposite the longitudinal end 211 of the connecting piece 200 inside the stranded wire 100. A possibly necessary through-recess 231 in the connecting piece 200 for an attachment means 430 (cf. Fig. 3) can be established temporally after moulding the connecting piece 200.

Looking again at a longitudinal end region of the high-current connector 10, the longitudinal end region being longer than the connecting piece 200, from the longitudinal end 221 of the connecting piece 200 in the longitudinal direction L, the high-current connector 10 thus initially exclusively has the connecting piece 200, or the high-current connector 10 here already has the transition structure 150 which can be embedded in the connecting piece 200 as a kind of core. The transition structure 150 and then the stranded wire 100 follow in the longitudinal direction L, the transition structure 150 again being able to be embedded in the connecting piece 200 as a kind of core.

If the transition structure 150 is formed as a core in the connecting piece 200, at least one dimension of the core or the stranded wire 100 is smaller in a specific section than a corresponding dimension of the connecting piece 200. - It is of course possible that, at least in sections, all dimensions (i.e. all dimensions of the related section) of the connecting piece 200 primarily or substantially correspond to those of the transition structure 150. If this is the case for example for the entire connecting piece 200, then for example the longitudinal end section L, 110 of the stranded wire 100 has been cast over and together with the casting material forms the connecting piece 200.

Fig. 3 shows an application of the high-current connector 10 or stranded wire 10 to an electrical cell connector 2 or module connector 2 for an accumulator 1 or a battery 1. In this case, the entire high-current connector 1 is substantially fully encapsulated, i.e. in the width direction B, height direction H and longitudinal direction L neither the stranded wire 100 nor the connecting piece 200 of the high-current connector 10 is accessible from the outside. An exception to this may be provided by an electrical contact unit 412 of an electrical contact element 410 of the cell connector 2 or module connector 2 and/or by an individual longitudinal end section of each attachment means 430.

The high-current connector 10 is electrically insulated in its central region and on the longitudinal end regions which are adjacent thereto on both sides. The high-current connector 10 is electrically insulated preferably by means of a jacket 300 in the central region and preferably by means of a capsule 400 on each of the longitudinal end regions. The jacket 300 and the capsules 400 are preferably made from a plastics material. According to the depicted exemplary embodiment, the respective capsule 400 and the jacket 300 overlap. The respective capsule 400 preferably has two insulating shells 410, 410, which can be attached to one another in particular by means of partially complementary units, in particular partially complementary locking units.

Inside an individual insulating shell 410 of preferably every capsule 400, an electrical contact element 420 of the cell connector 2 or the module connector 2 is received, in particular mounted. In this case, the contact element 420 is located between the connecting piece 200 and the related insulating shell 410, a through-recess 431 of the contact element 420 being aligned with the through-recess 231 of the connecting piece 200. Each contact element 420 has its electrical contact unit 422 exposed at the related capsule 400 at an end in the height direction H, for which purpose the insulating shell 410 has a corresponding through-recess.

The cell connector 2 or the module connector 2 can be electrically connected to a terminal of the accumulator 1 or the battery 1 via the contact unit 422, which is in an electrically conductive connection with the high-current connector 10. For this purpose, the related longitudinal end region of the cell connector 2 or the module connector 2 is fixed onto the terminal by means of an attachment means 430, in particular a screw 430, the electrical contact element 420 being brought into an electrically conductive clamping connection with the terminal. In this case, the attachment means 430 extends through the through-recess 231 of the connecting piece 200 and the through-recess 431 of the contact element 420.

## Claims

1. Electrical high-current connector (10), in particular for an electrical cell connector (2) or an electrical module connector (2) for an accumulator (1) or a battery (1) for the automotive industry, having an electrical stranded wire (100) and at least one solid electrical connecting piece (200), in particular a solid bus bar (200), **characterised in that**
a longitudinal end section (L, 110) of the stranded wire (100) is embedded in the material of a solid longitudinal section (L, 210) of the connecting piece (200), wherein in said embedding, in a three-dimensional transition structure (150) of the longitudinal end section (L, 110) of the stranded wire (100) with the connecting piece (200), the material of the connecting piece (200) is located between the strands of the stranded wire (100).

2. Electrical high-current connector (10) according the preceding claim, **characterised in that**, in the high-current connector (10), by means of the two related longitudinal sections (L, 110, 210) of the stranded wire (100) and of the connecting piece (200), the three-dimensional transition structure (150) is formed, in which the high-current connector (10) is constituted by the stranded wire (100) and the connecting piece (200).

3. Electrical high-current connector (10) according to one of the preceding claims, **characterised in that** the connecting piece (200) is formed such that an external dimension (B, H, L) of the stranded wire (100), in particular an external dimension of the stranded wire (100) in the longitudinal direction (L), is increased.

4. Electrical high-current connector (10) according to one of the preceding claims, **characterised in that** the connecting piece (200) is moulded onto the section (L, 110) of the stranded wire (100).

5. Electrical high-current connector (10) according to one of the preceding claims, **characterised in that** the connecting piece (200) is cast onto the section (L, 110) of the stranded wire (100), or
the connecting piece (200) is forged, in particular cold forged, onto the section (L, 110) of the stranded wire (100).

6. Electrical high-current connector (10) according to one of the preceding claims, **characterised in that**:
• the high-current connector (10) is free from at least one of preferably two possible end contact sleeves,
• the connecting piece (200) is not formed as a stamped part (200),
• the stranded wire (100) is formed free from at least one of preferably two possible compacted sections, and/or
• the high-current connector (10) is free from at least one of preferably two possible solder or welding connections.

7. Electrical high-current connector (10) according to one of the preceding claims, **characterised in that**:
• the stranded wire (100) is formed as a flat strand (100), a round strand (100) or a braided sleeving (100),
• the stranded wire (100) has a copper material or an aluminium material, and/or
• the stranded wire (100) serves as a casting core for producing the high-current connector (10).

8. Method for producing an electrical high-current connector (10), in particular for an electrical cell connector (2) or an electrical module connector (2) for an accumulator (1) or a battery (1) for the automotive industry, wherein
the high-current connector (10) comprises an electrical stranded wire (100) and at least one solid electrical connecting piece (200), in particular a solid bus bar (200), **characterised in that**
a longitudinal end section (L, 110) of the stranded wire (100) is embedded into the material of a solid longitudinal section (L, 210) of the connecting piece (200), wherein in said embedding, in a three-dimensional transition structure (150) of the longitudinal end section (L, 110) of the stranded wire (100) with the connecting piece (200), the material of the connecting piece (200) is located between the strands of the stranded wire (100).

9. Production method according to the preceding claim, **characterised in that**, the high-current connector (10) is a connector according to one of claims 1 to 7.

10. Electrical cell connector (2) for an accumulator (1) or a battery (1) for the automotive industry, **characterised in that**
the cell connector (2) has an electrical high-current connector (10) according to one of claims 1 to 7, or
an electrical high-current connector (10) of the cell connector (2) is produced by a method according to claim 8 or 9.

11. Electrical cell connector (2) according to the preceding claim, **characterised in that**, with the exception of an electrical contact unit (412) of an electrical contact element (410) and optionally with the exception of an individual longitudinal end region of at least one attachment means (430), the entire high-current connector (10) is fully encapsulated in the width direction (B), height direction (H) and longitudinal direction (L).

12. Electrical cell connector (2) according to the preceding claim, **characterised in that**:
• the high-current connector (10) is electrically insulated in its central region by means of a jacket (300),
• the high-current connector (10) is electrically insulated on at least one longitudinal end region by means of a two-part capsule (400),
• two insulating shells (410) of the capsule (400) are formed pluggable to one another and in particular lockable to one another,
• an individual insulating shell (410) of the capsule (400) receives an electrical contact element (420) of the cell connector (2), and/or
• an electrical contact unit (422) of the contact element (420) is exposed on a side of the insulating shell (410).

13. Electrical module connector (2) for an accumulator (1) or a battery (1) for the automotive industry, **characterised in that** the module connector (2) is -an electrical cell connector (2) according to one of claims 10 to 12.

14. Electrical device (1), in particular accumulator (1) or battery (1) for the automotive industry, **characterised in that**
electrical device (1) has an electrical high-current connector (10) according to one of claims 1 to 7.

## Patentansprüche

1. Elektrischer Hochstromverbinder (10), insbesondere für einen elektrischen Zellenverbinder (2) oder einen elektrischen Modulverbinder (2) für einen Akkumulator (1) oder eine Batterie (1) für die Automobilindustrie, mit einem elektrischen Litzenleiter (100) und mindestens einem festen elektrischen Verbindungsstück (200), insbesondere einer festen Sammelschiene (200), **dadurch gekennzeichnet, dass**
ein Längsendabschnitt (L, 110) des Litzenleiters (100) in das Material eines festen Längsabschnitts (L, 210) des Verbindungsstücks (200) eingebettet ist, wobei bei dieser Einbettung in einer dreidimensionalen Übergangsstruktur (150) des Längsendabschnitts (L, 110) des Litzenleiters (100) zum Verbindungsstück (200) das Material des Verbindungsstücks (200) zwischen den Litzen des Litzenleiters (100) angeordnet ist.

2. Elektrischer Hochstromverbinder (10) nach dem vorhergehenden Anspruch, **dadurch gekennzeichnet, dass** in dem Hochstromverbinder (10) mittels der beiden zueinander gehörenden Längsabschnitte (L, 110, 210) des Litzenleiters (100) und des Verbindungsstücks (200) die dreidimensionale Übergangsstruktur (150) gebildet wird, wobei der Hochstromverbinder (10) durch den Litzenleiter (100) und das Verbindungsstück (200) gebildet wird.

3. Elektrischer Hochstromverbinder (10) nach einem der vorhergehenden Ansprüche, **dadurch gekennzeichnet, dass** das Verbindungsstück (200) so ausgebildet ist, dass eine Außenabmessung (B, H, L) des Litzenleiters (100), insbesondere eine Außenabmessung des Litzenleiters (100) in der Längsrichtung (L), vergrößert wird.

4. Elektrischer Hochstromverbinder (10) nach einem der vorhergehenden Ansprüche, **dadurch gekennzeichnet, dass** das Verbindungsstück (200) auf den Abschnitt (L, 110) des Litzenleiters (100) aufgespritzt ist.

5. Elektrischer Hochstromverbinder (10) nach einem der vorhergehenden Ansprüche, **dadurch gekennzeichnet, dass** das Verbindungsstück (200) auf den Abschnitt (L, 110) des Litzenleiters (100) aufgegossen ist oder
das Verbindungsstück (200) auf den Abschnitt (L, 110) des Litzenleiters (100) geschmiedet, insbesondere kaltgeschmiedet, ist.

6. Elektrischer Hochstromverbinder (10) nach einem der vorhergehenden Ansprüche, **dadurch gekennzeichnet, dass**:
• der Hochstromverbinder (10) frei von mindestens einer von vorzugsweise zwei möglichen Endkontakthülsen ist,
• das Verbindungsstück (200) nicht als Stanzteil (200) ausgebildet ist,
• der Litzenleiter (100) frei von mindestens einem von vorzugsweise zwei möglichen verdichteten Abschnitten ausgebildet ist und/oder
• der Hochstromverbinder (10) frei von mindestens einer von vorzugsweise zwei möglichen Löt- oder Schweißverbindungen ist.

7. Elektrischer Hochstromverbinder (10) nach einem der vorhergehenden Ansprüche, **dadurch gekennzeichnet, dass**:
• der Litzenleiter (100) als Flachlitze (100), Rundlitze (100) oder geflochtene Hülse (100) ausgebildet ist,
• der Litzenleiter (100) ein Kupfermaterial oder ein Aluminiummaterial aufweist und/oder
• der Litzenleiter (100) als Gusskern zur Herstellung des Hochstromverbinders (10) dient.

8. Verfahren zum Herstellen eines elektrischen Hochstromverbinders (10), insbesondere für einen elektrischen Zellenverbinder (2) oder einen elektrischen Modulverbinder (2) für einen Akkumulator (1) oder eine Batterie (1) für die Automobilindustrie, wobei
der Hochstromverbinder (10) einen elektrischen Litzenleiter (100) und mindestens ein festes elektrisches Verbindungsstück (200), insbesondere eine feste Sammelschiene (200), umfasst, **dadurch gekennzeichnet, dass**
ein Längsendabschnitt (L, 110) des Litzenleiters (100) in das Material eines festen Längsabschnitts (L, 210) des Verbindungsstücks (200) eingebettet ist, wobei bei dieser Einbettung in einer dreidimensionalen Übergangsstruktur (150) des Längsendabschnitts (L, 110) des Litzenleiters (100) zum Verbindungsstück (200) das Material des Verbindungsstücks (200) zwischen den Litzen des Litzenleiters (100) angeordnet ist.

9. Herstellungsverfahren nach dem vorhergehenden Anspruch, **dadurch gekennzeichnet, dass** es sich bei dem Hochstromverbinder (10) um einen Verbinder nach einem der Ansprüche 1 bis 7 handelt.

10. Elektrischer Zellenverbinder (2) für einen Akkumulator (1) oder eine Batterie (1) für die Automobilindustrie, **dadurch gekennzeichnet, dass**
der Zellenverbinder (2) einen elektrischen Hochstromverbinder (10) nach einem der Ansprüche 1 bis 7 aufweist oder
ein elektrischer Hochstromverbinder (10) des Zellenverbinders (2) nach einem Verfahren nach Anspruch 8 oder 9 hergestellt ist.

11. Elektrischer Zellenverbinder (2) nach dem vorhergehenden Anspruch, **dadurch gekennzeichnet, dass** mit Ausnahme einer elektrischen Kontakteinheit (412) eines elektrischen Kontaktelements (410) und wahlweise mit Ausnahme eines einzelnen Längsendbereichs mindestens eines Anbringungsmittels (430) der gesamte Hochstromverbinder (10) in Breitenrichtung (B), Höhenrichtung (H) und Längsrichtung (L) vollständig vergossen ist.

12. Elektrischer Zellenverbinder (2) nach dem vorhergehenden Anspruch, **dadurch gekennzeichnet, dass**:
• der Hochstromverbinder (10) in seinem mittleren Bereich mittels einer Ummantelung (300) elektrisch isoliert ist,
• der Hochstromverbinder (10) an mindestens einem Längsendbereich mittels einer zweiteiligen Kapsel (400) elektrisch isoliert ist,
• zwei Isolierhälften (410) der Kapsel (400) aneinandersteckbar und insbesondere aneinander verriegelbar ausgebildet sind,
• eine einzelne Isolierhälfte (410) der Kapsel (400) ein elektrisches Kontaktelement (420) des Zellenverbinders (2) aufnimmt und/oder
• eine elektrische Kontakteinheit (422) des Kontaktelements (420) an einer Seite der Isolierhülse (410) freiliegt.

13. Elektrischer Modulverbinder (2) für einen Akkumulator (1) oder eine Batterie (1) für die Automobilindustrie, **dadurch gekennzeichnet, dass** der Modulverbinder (2) ein elektrischer Zellenverbinder (2) nach einem der Ansprüche 10 bis 12 ist.

14. Elektrische Vorrichtung (1), insbesondere Akkumulator (1) oder Batterie (1) für die Automobilindustrie, **dadurch gekennzeichnet, dass**
die elektrische Vorrichtung (1) einen elektrischen Hochstromverbinder (10) nach einem der Ansprüche 1 bis 7 aufweist.

## Revendications

1. Connecteur à haute intensité électrique (10), en particulier pour un connecteur de cellule électrique (2) ou un connecteur de module électrique (2) pour un accumulateur (1) ou une batterie (1) pour l'industrie automobile, ayant un fil toronné électrique (100) et au moins une pièce de connexion électrique solide (200), en particulier une barre omnibus solide (200), **caractérisé en ce que**
une section d'extrémité longitudinale (L, 110) du fil toronné (100) est encastrée dans le matériau d'une section longitudinale solide (L, 210) de la pièce de connexion (200), dans lequel, dans ledit encastrement, dans une structure de transition tridimensionnelle (150) de la section d'extrémité longitudinale (L, 110) du fil toronné (100) avec la pièce de connexion (200), le matériau de la pièce de connexion (200) est positionné entre les torons du fil toronné (100).

2. Connecteur à haute intensité électrique (10) selon la revendication précédente, **caractérisé en ce que**, dans le connecteur à haute intensité (10), au moyen des deux sections longitudinales connexes (L, 110, 210) du fil toronné (100) et de la pièce de connexion (200), la structure de transition tridimensionnelle (150) est formée, dans laquelle le connecteur à haute intensité (10) est constitué par le fil toronné (100) et la pièce de connexion (200).

3. Connecteur à haute intensité électrique (10) selon l'une des revendications précédentes, **caractérisé en ce que** la pièce de connexion (200) est formée de manière telle qu'une dimension externe (B, H, L) du fil toronné (100), en particulier une dimension externe du fil toronné (100) dans la direction longitudinale (L), est augmentée.

4. Connecteur à haute intensité électrique (10) selon l'une des revendications précédentes, **caractérisé en ce que** la pièce de connexion (200) est moulée sur la section (L, 110) du fil toronné (100).

5. Connecteur à haute intensité électrique (10) selon l'une des revendications précédentes, **caractérisé en ce que** la pièce de connexion (200) est coulée sur la section (L, 110) du fil toronné (100), ou
la pièce de connexion (200) est forgée, en particulier forgée à froid, sur la section (L, 110) du fil toronné (100).

6. Connecteur à haute intensité électrique (10) selon l'une des revendications précédentes, **caractérisé en ce que** :
• le connecteur à haute intensité (10) est formé de façon dépourvue d'au moins un parmi, de préférence, deux manchons de contact d'extrémité possibles,
• la pièce de connexion (200) n'est pas sous forme de partie estampée (200),
• le fil toronné (100) est formé de façon dépourvue d'au moins une parmi, de préférence, deux sections compactées possibles, et/ou
• le connecteur à haute intensité (10) est dépourvu d'au moins une parmi, de préférence, deux connexions brasées ou soudées possibles.

7. Connecteur à haute intensité électrique (10) selon l'une des revendications précédentes, **caractérisé en ce que** :
• le fil toronné (100) est sous forme de toron plat (100), de toron rond (100), ou de gaine tressée (100),
• le fil toronné (100) a un matériau en cuivre ou un matériau en aluminium, et/ou
• le fil toronné (100) sert de noyau de moule pour fabriquer le connecteur à haute intensité (10).

8. Procédé pour fabriquer un connecteur à haute intensité électrique (10), en particulier pour un connecteur de cellule électrique (2) ou un connecteur de module électrique (2) pour un accumulateur (1) ou une batterie (1) pour l'industrie automobile, dans lequel
le connecteur à haute intensité (10) comprend un fil toronné électrique (100) et au moins une pièce de connexion électrique solide (200), en particulier une barre omnibus solide (200), **caractérisé en ce que**
une section d'extrémité longitudinale (L, 110) du fil toronné (100) est encastrée dans le matériau d'une section longitudinale solide (L, 210) de la pièce de connexion (200), dans lequel, dans ledit encastrement, dans une structure de transition tridimensionnelle (150) de la section d'extrémité longitudinale (L, 110) du fil toronné (100) avec la pièce de connexion (200), le matériau de la pièce de connexion (200) est positionné entre les torons du fil toronné (100).

9. Procédé de fabrication selon la revendication précédente, **caractérisé en ce que**, le connecteur à haute intensité (10) est un connecteur selon l'une des revendications 1 à 7.

10. Connecteur de cellule électrique (2) pour un accumulateur (1) ou une batterie (1) pour l'industrie automobile, **caractérisé en ce que**
le connecteur de cellule (2) a un connecteur à haute intensité électrique (10) selon l'une des revendications 1 à 7, ou
un connecteur à haute intensité électrique (10) du connecteur de cellule (2) est fabriqué par un procédé selon la revendication 8 ou 9.

11. Connecteur de cellule électrique (2) selon la revendication précédente, **caractérisé en ce que**, à l'exception d'une unité de contact électrique (412) d'un élément de contact électrique (410) et facultativement à l'exception d'une région d'extrémité longitudinale individuelle d'au moins un moyen d'attache (430), le connecteur à haute intensité entier (10) est complètement encapsulé dans la direction de largeur (B), la direction de hauteur (H), et la direction longitudinale (L).

12. Connecteur de cellule électrique (2) selon la revendication précédente, **caractérisé en ce que** :
• le connecteur à haute intensité (10) est isolé électriquement dans sa région centrale au moyen d'une enveloppe (300),
• le connecteur à haute intensité (10) est isolé électriquement sur au moins une région d'extrémité longitudinale au moyen d'une capsule à deux parties (400),
• deux coquilles isolantes (410) de la capsule (400) sont formées de façon enfichable l'une avec l'autre et en particulier de façon verrouillable l'une à l'autre,
• une coquille isolante individuelle (410) de la capsule (400) reçoit un élément de contact électrique (420) du connecteur de cellule (2), et/ou
• une unité de contact électrique (422) de l'élément de contact (420) est exposée sur un côté de la coquille isolante (410).

13. Connecteur de module électrique (2) pour un accumulateur (1) ou une batterie (1) pour l'industrie automobile, **caractérisé en ce que** le connecteur de module (2) est un connecteur de cellule électrique (2) selon l'une des revendications 10 à 12.

14. Dispositif électrique (1), en particulier accumulateur (1) ou batterie (1) pour l'industrie automobile, **caractérisé en ce que**
le dispositif électrique (1) a un connecteur à haute intensité électrique (10) selon l'une des revendications 1 à 7.
